# DEMANDE DE BREVET EUROPEEN

(11) **EP 3 839 816 A1**
(43) Date de publication de la demande: **23.06.2021**
(21) Numéro de dépôt: 20214858.1
(22) Date de dépôt: 17.12.2020
(51) Int. Cl.: G06K 9/00, G06N 3/02, G06T 7/00, G06T 7/73, H04N 7/18, G06T 7/292

(54) **DISPOSITIF ÉLECTRONIQUE D'IDENTIFICATION ET DE SUIVI D'AU MOINS UNE CIBLE, SYSTÈME ÉLECTRONIQUE, PROCÉDÉ ET PROGRAMME D'ORDINATEUR ASSOCIÉS**

(30) Priorité: 17.12.2019 FR 1914599
(71) Demandeur: Bull SAS, 78340 Les Clayes-sous-Bois (FR)
(72) Inventeur: ARNAISE, Nicolas, 38130 ECHIROLLES (FR); BOUKAMEL-DONNOU, Cécile, 38130 ECHIROLLES (FR); PELLETIER, Benoit, 38960 SAINT ETIENNE DE CROSSEY (FR)
(74) Mandataire: IPAZ

(57) **Abrégé**

Dispositif électronique d'identification et de suivi (10) d'au moins une cible (12), comprenant :
- un module de réception (14) configuré pour recevoir des images à partir d'un réseau (15) de capteurs d'images (16) ;
- un module de détermination (18) configuré pour déterminer des signatures visuelles d'une cible (12) respective à partir des images reçues, chaque signature visuelle étant déterminée à partir d'une image respective comportant une représentation de ladite cible (12), chaque signature visuelle étant en forme d'un vecteur dans un espace multidimensionnel ;
- un premier module de filtrage (20) configuré pour filtrer les signatures visuelles ;
- un module de calcul (22) configuré pour calculer, dans l'espace multidimensionnel, une signature visuelle de référence ;
- un module de détection (24) configuré pour détecter une apparition de la cible (12), et
- un deuxième module de filtrage (26).

## Description

La présente invention concerne un dispositif électronique d'identification et de suivi d'au moins une cible.

L'invention concerne également un système électronique d'identification et de suivi d'au moins une cible comprenant un réseau de capteurs d'images et un tel dispositif électronique d'identification et de suivi.

L'invention concerne aussi un procédé d'identification et de suivi d'au moins une cible, le procédé étant mis en œuvre par un tel dispositif électronique d'identification et de suivi.

L'invention concerne également un programme d'ordinateur comportant des instructions logicielles qui, lorsqu'elles sont exécutées par un ordinateur, mettent en œuvre un tel procédé d'identification et de suivi.

L'invention concerne le domaine de surveillance de cibles, notamment le domaine de la vidéosurveillance de cibles. En particulier, l'invention concerne le domaine de l'analyse, i.e. du traitement, d'images reçues par des capteurs d'images pour surveiller au moins une cible. La ou les cibles sont notamment des personnes.

Classiquement, un réseau de capteurs d'images transmet des images captées à un dispositif de calcul qui permet de reconnaître une ou plusieurs personnes présentes dans les images.

Par exemple, US 9,111,147 B2 décrit un système pour identifier ou reconnaître une personne à partir des images. Cependant, de tels procédés ne sont pas entièrement satisfaisants.

Par exemple, de tels procédés identifient souvent, de manière erronée, des personnes similaires mais différentes comme étant la cible recherchée. Aussi, ces procédés n'identifient pas la cible sur certaines images. La fiabilité de la détection n'est donc pas optimale.

Aussi, ces procédés sont souvent complexes et nécessitent ainsi une capacité de calcul élevée compte tenu du nombre important d'images à analyser.

Ainsi, un but de l'invention est de proposer un dispositif électronique d'identification et de suivi moins complexe et permettant d'identifier et de suivre au moins une cible de manière plus fiable.

A cet effet, l'invention a pour objet un dispositif électronique d'identification et de suivi d'au moins une cible, comprenant :
- un module de réception configuré pour recevoir des images à partir d'un réseau de capteurs d'images ;
- un module de détermination configuré pour déterminer des signatures visuelles d'une cible respective à partir des images reçues, chaque signature visuelle étant déterminée à partir d'une image respective comportant une représentation de ladite cible, chaque signature visuelle étant en forme d'un vecteur dans un espace multidimensionnel ;
- un premier module de filtrage configuré pour filtrer les signatures visuelles en conservant chaque signature visuelle présentant, dans l'espace multidimensionnel, une distance par rapport à la signature visuelle la plus proche en distance de ladite signature visuelle, qui est inférieure à un seuil de référence ;
- un module de calcul configuré pour calculer, dans l'espace multidimensionnel, une signature visuelle de référence à partir d'une moyenne des signatures visuelles conservées par le premier module de filtrage ;
- un module de détection configuré pour détecter une apparition de la cible dans au moins une nouvelle image reçue, par comparaison de la signature visuelle de référence avec une signature visuelle de la représentation de la cible comprise dans la nouvelle image reçue, et
- un deuxième module de filtrage comportant au moins un filtre parmi un filtre spatio-temporel configuré pour filtrer ladite apparition en fonction d'une position du capteur d'images associé à une acquisition de la nouvelle image reçue et d'un instant temporel de ladite acquisition, et un filtre d'apparence visuelle de la cible configuré pour filtrer ladite apparition en fonction d'au moins une caractéristique visuelle relative à la représentation de la cible comprise dans la nouvelle image reçue.

Ainsi, le dispositif électronique d'identification et de suivi selon l'invention permet d'identifier et de suivre de manière plus fiable au moins une cible. En effet, le deuxième module de filtrage permet de filtrer des fausses détections, également appelées faux positifs.

Grâce au filtrage de signatures visuelles, la capacité de calcul requise est limitée. Comme les signatures visuelles sont en forme d'un vecteur dans un espace multidimensionnel, elles sont faciles à traiter, en utilisant peu de capacité de calcul.

Aussi, le premier module de filtrage permet d'écarter des signatures visuelles aberrantes, en conservant chaque signature visuelle présentant une distance, par rapport à la signature visuelle la plus proche en distance de ladite signature visuelle, qui est inférieure au seuil de référence. Cela permet de réduire le nombre de calculs suivants, car moins de signatures visuelles sont à traiter, et permet en outre d'augmenter la fiabilité de l'identification et du suivi de la cible.

Notamment, la combinaison du premier module de filtrage et du module de calcul permet d'obtenir une moyenne des signatures visuelles déjà filtrées par le premier module de filtrage, ce qui permet ainsi un calcul simple est efficace. Ainsi, la capacité de calcul requise est encore réduite.

Suivant d'autres aspects avantageux de l'invention, le dispositif électronique d'identification et de suivi comprend une ou plusieurs des caractéristiques suivantes, prises isolément ou suivant toutes les combinaisons techniquement possibles :
- le module de détermination est configuré pour obtenir la représentation de ladite cible via un réseau de neurones, des variables d'entrée du réseau de neurones étant les images reçues et une variable de sortie étant ladite représentation ;
- le filtre spatio-temporel est configuré pour calculer une vitesse moyenne de déplacement de la cible entre une position de référence de la cible et la position du capteur d'images associé à l'acquisition de la nouvelle image reçue ;
- le filtre spatio-temporel est configuré pour attribuer à ladite apparition une probabilité de détection effective de la cible en fonction de la vitesse moyenne, en comparaison avec une vitesse de référence ;
- chaque caractéristique visuelle est choisie parmi le groupe consistant en : une couleur à l'intérieur de la représentation de la cible et une forme d'un contour de la représentation de la cible.
- le filtre d'apparence visuelle comprend un modèle comportant au moins un premier paramètre, le premier paramètre étant une clarté de la couleur, le modèle étant adapté pour mettre en oeuvre l'espace chromatique CIELAB.
- le filtre d'apparence visuelle comprend un réseau de neurones, configuré pour recevoir en entrée la représentation de la cible comprise dans la nouvelle image reçue, et pour fournir en sortie au moins la caractéristique visuelle relative à la représentation de la cible comprise dans la nouvelle image reçue, le filtre d'apparence visuelle étant configuré pour comparer ladite caractéristique visuelle avec une caractéristique visuelle de référence correspondante.

L'invention a également pour objet un système électronique d'identification et de suivi d'au moins une cible, comprenant un réseau de capteurs d'images et au moins un dispositif électronique d'identification et de suivi d'au moins une cible tel que décrit ci-dessus, ledit dispositif étant configuré pour recevoir et traiter des images du réseau de capteurs d'images.

L'invention a également pour objet un procédé d'identification et de suivi d'au moins une cible, le procédé étant mis en oeuvre par un dispositif électronique d'identification et de suivi et comprenant :
- la réception d'images à partir d'un réseau de capteurs d'images ;
- la détermination de signatures visuelles d'une cible respective à partir des images reçues, chaque signature visuelle étant déterminée à partir d'une image respective comportant une représentation de ladite cible, chaque signature visuelle étant en forme d'un vecteur dans un espace multidimensionnel ;
- le premier filtrage comprenant le filtrage des signatures visuelles en conservant chaque signature visuelle présentant, dans l'espace multidimensionnel, une distance par rapport à la signature visuelle la plus proche en distance de ladite signature visuelle, qui est inférieure à un seuil de référence ;
- le calcul, dans l'espace multidimensionnel, d'une signature visuelle de référence à partir d'une moyenne des signatures visuelles conservées lors du premier filtrage ;
- la détection d'une apparition de la cible dans au moins une nouvelle image reçue, par comparaison de la signature visuelle de référence avec une signature visuelle de la représentation de la cible comprise dans la nouvelle image reçue, et
- le deuxième filtrage comportant au moins un filtrage spatio-temporel comprenant le filtrage de ladite apparition en fonction d'une position du capteur d'images associé à une acquisition de la nouvelle image reçue et d'un instant temporel de ladite acquisition, et un filtrage d'apparence visuelle de la cible, le filtrage d'apparence visuelle comprenant le filtrage de ladite apparition en fonction d'au moins une caractéristique visuelle relative à la représentation de la cible comprise dans la nouvelle image reçue.

L'invention a également pour objet un programme d'ordinateur comportant des instructions logicielles qui, lorsqu'elles sont exécutées par un ordinateur, mettent en œuvre un procédé tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
la figure 1 est une représentation schématique d'un système d'identification et de suivi d'au moins une cible comprenant un réseau de capteurs d'images et un dispositif électronique d'identification et de suivi selon l'invention, configuré pour identifier et suivre au moins une cible, et
la figure 2 est un organigramme d'un procédé, selon l'invention, d'identification et de suivi d'au moins une cible, le procédé étant mis en œuvre par le dispositif électronique d'identification et de suivi de la figure 1.

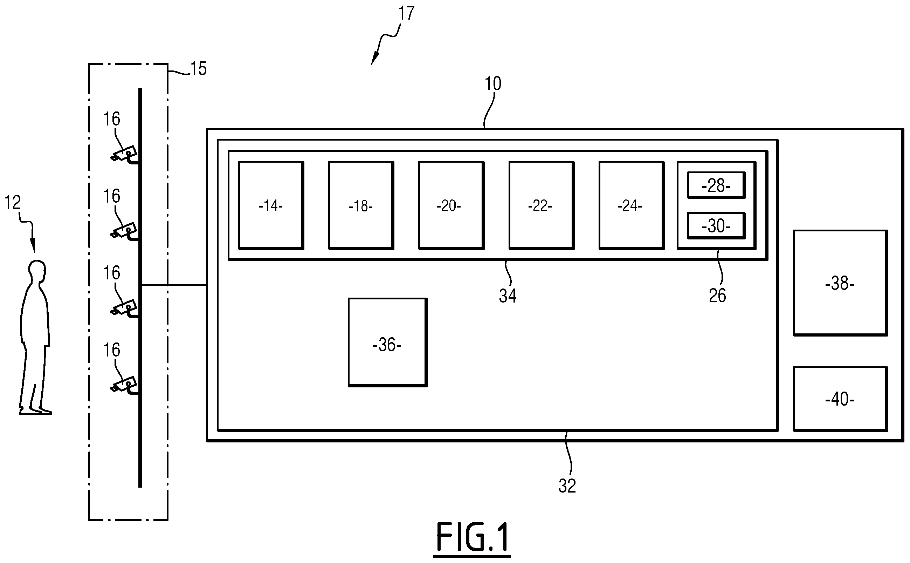

Sur la figure 1, un dispositif électronique d'identification et de suivi 10 est configuré pour identifier et suivre au moins une cible 12. Dans ce qui suit, le dispositif électronique d'identification et de suivi 10 sera appelé dispositif de suivi 10.

Le dispositif de suivi 10 comprend un module de réception 14 configuré pour recevoir des images à partir d'un réseau 15 de capteurs d'images 16. Le dispositif de suivi 10 et le réseau 15 de capteurs d'images 16 forment un système électronique 17 d'identification et de suivi de la cible 12. Le dispositif de suivi 10 est ainsi configuré pour recevoir et traiter les images du réseau 15 de capteurs d'images 16.

Le dispositif de suivi 10 comprend en outre un module de détermination 18 configuré pour déterminer des signatures visuelles de la cible 12 respective à partir des images reçues, chaque signature visuelle étant déterminée à partir d'une image respective comportant une représentation de la cible 12, chaque signature visuelle étant en forme d'un vecteur dans un espace multidimensionnel.

Le dispositif de suivi 10 comprend en outre un premier module de filtrage 20 configuré pour filtrer les signatures visuelles en conservant chaque signature visuelle présentant, dans l'espace multidimensionnel, une distance par rapport à la signature visuelle la plus proche en distance de ladite signature visuelle, qui est inférieure à un seuil de référence.

Le dispositif de suivi 10 comprend en outre un module de calcul 22 configuré pour calculer, dans l'espace multidimensionnel, une signature visuelle de référence à partir d'une moyenne des signatures visuelles conservées par le premier module de filtrage 20. La moyenne des signatures visuelles conservées forme notamment une agrégation de signatures visuelles. Notamment, la moyenne des signatures visuelles est un vecteur dans l'espace multidimensionnel.

Le dispositif de suivi 10 comprend en outre un module de détection 24 configuré pour détecter une apparition de la cible 12 dans au moins une nouvelle image reçue, par comparaison de la signature visuelle de référence avec une signature visuelle de la représentation de la cible 12 comprise dans la nouvelle image reçue.

L'homme du métier comprendra bien entendu qu'une nouvelle image reçue est une image distincte des images reçues ayant servi à déterminer la signature visuelle de référence.

Le dispositif de suivi 10 comprend en outre un deuxième module de filtrage 26 comportant au moins un filtre parmi un filtre spatio-temporel 28 configuré pour filtrer ladite apparition en fonction d'une position du capteur d'images 16 associé à une acquisition de la nouvelle image et d'un instant temporel de ladite acquisition, et un filtre d'apparence visuelle 30 de la cible 12 configuré pour filtrer ladite apparition en fonction d'au moins une caractéristique visuelle relative à la représentation de la cible 12 comprise dans la nouvelle image reçue.

Dans l'exemple de la figure 1, le dispositif de suivi 10 comprend une unité de traitement d'informations 32 formée par exemple d'une mémoire 34 et d'un processeur 36 associé à la mémoire 34. Le dispositif de suivi 10 comprend une interface de saisie 38, configuré pour saisir des données d'entrée, telles que des sélections de la cible 12 de la part d'un opérateur. Le dispositif de suivi 10 comprend en outre un module d'affichage 40 configuré pour afficher des informations issues de l'unité de traitement d'informations 32.

La cible 12 est apte à se déplacer, et est de préférence un être vivant, notamment une personne. En variante, la cible 12 est un animal.

Dans l'exemple de la figure 1, le module de détection 14, le module de détermination 18, le premier module de filtrage 20, le module de calcul 22, le module de détection 24 et le deuxième module de filtrage 26 sont réalisés chacun sous forme d'un logiciel, ou d'une brique logicielle, exécutables par le processeur 36. La mémoire 34 du dispositif de suivi 10 est alors apte à stocker un logiciel réception configuré pour recevoir des images à partir du réseau 15 de capteurs d'images 16, un logiciel de détermination configuré pour déterminer des signatures visuelles de la cible 12 respective à partir des images reçues, un premier logiciel de filtrage configuré pour filtrer les signatures visuelles en conservant chaque signature visuelle présentant, dans l'espace multidimensionnel, une distance par rapport à la signature visuelle la plus proche en distance de ladite signature visuelle, qui est inférieure au seuil de référence, un logiciel de calcul configuré pour calculer, dans l'espace multidimensionnel, la signature visuelle de référence à partir de la moyenne des signatures visuelles conservées par le premier logiciel de filtrage, un logiciel de détection configuré pour détecter une apparition respective de la cible 12 dans au moins une nouvelle image reçue par comparaison de la signature visuelle de référence avec la signature visuelle de la représentation de la cible 12 comprise dans la nouvelle image reçue, et un deuxième logiciel de filtrage comportant au moins un filtre parmi le filtre spatio-temporel 28 et le filtre d'apparence visuelle 30. Le processeur 36 est alors apte à exécuter chacun des logiciels parmi le logiciel de réception 14, le logiciel de détermination 18, le premier logiciel de filtrage 20, le logiciel de calcul 22, le logiciel de détection 24 et le deuxième logiciel de filtrage 26.

En variante non représentée, le module de détection 14, le module de détermination 18, le premier module de filtrage 20, le module de calcul 22, le module de détection 24 et le deuxième module de filtrage 26 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif de suivi 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Notamment, le support lisible est intégré dans un disque statique à semiconducteurs ou SSD (de l'anglais *Solid-State Drive*).

Sur le support lisible est alors mémorisé un programme d'ordinateur comportant des instructions logicielles.

Dans l'exemple de la figure 1, le module de détection 14, le module de détermination 18, le premier module de filtrage 20, le module de calcul 22, le module de détection 24 et le deuxième module de filtrage 26 sont embarqués au sein de l'unique unité de traitement d'informations 32, c'est-à-dire au sein d'un même et unique calculateur électronique.

En variante, non représentée, le module de détection 14, le module de détermination 18, le premier module de filtrage 20, le module de calcul 22, le module de détection 24 et le deuxième module de filtrage 26, sont embarqués au sein de plusieurs calculateurs électroniques distincts et séparés.

Selon cette variante, le module de réception 14 est par exemple disposé à proximité du réseau 15 de capteurs d'images 16, en étant relié à chacun des capteurs d'images 16, par liaison filaire ou radioélectrique. En complément facultatif, le module de réception 14 est par exemple intégré à un capteur d'images 16 correspondant.

Le module de réception 14 est par exemple configuré pour recevoir les images du réseau 15 de capteurs d'images 16 par l'intermédiaire d'un module de conversion, non représenté, qui est configuré pour convertir des flux de vidéo de chaque capteur d'images 16 en plusieurs images distinctes.

En variante, le module de réception 14 est configuré pour recevoir les images distinctes directement de la part des capteurs d'images 16. Selon cette variante, chaque capteur d'images 16 du réseau 15 comprend un module de conversion respectif, propre à convertir le flux vidéo respectif en plusieurs images distinctes.

Les capteurs d'images 16 du réseau 15 sont notamment agencés de manière non-uniforme. Les capteurs d'images 16 sont par exemple agencés dans un environnement urbain. Chaque capteur d'images 16 est par exemple une caméra vidéo, notamment une caméra vidéo dans le domaine visible. En variante ou en complément, au moins un capteur d'images 16 est une caméra infrarouge, ou caméra IR.

Le module de détermination 18 est configuré pour recevoir les images du module de réception 14. Le module de détermination 18 est par exemple configuré pour générer les représentations de la cible 12 à partir des images reçues.

Par « représentation », il est entendu une partie de l'image comprenant la cible 12. La représentation est par exemple une forme délimitée selon une direction horizontale et une direction verticale par des extrémités de la cible 12. La représentation est par exemple en forme d'un polygone, de préférence en forme d'un rectangle découpé dans l'image correspondante.

Notamment, le module de détermination 18 comprend un premier réseau de neurones, des variables d'entrée du premier réseau de neurones étant les images reçues et une variable de sortie dudit premier réseau de neurones étant ladite représentation. Le module de détermination 18 est ainsi en particulier configuré pour obtenir la ou les représentations de la cible 12 via ce premier réseau de neurones.

Par exemple, le module de détermination 18 est configuré pour obtenir une pluralité de représentations de cibles respectives à partir de chaque image.

Le module de détermination 18 est en outre configuré pour classer les représentations en fonction d'un ordre chronologique pour chaque cible 12. Le module de détermination 18 est par exemple configuré pour obtenir des représentations ainsi classées.

Le module de détermination 18 est par exemple configuré pour extraire les signatures visuelles de la ou des cibles 12 à partir des représentations classées. Notamment, le module de détermination 18 comprend un deuxième réseau de neurones, des variables d'entrée de ce deuxième réseau de neurones étant les représentations classées et des variables de sortie de ce deuxième réseau étant les signatures visuelles correspondant aux représentations.

Le module de détermination 18 est notamment configuré pour déterminer une signature visuelle pour chaque représentation. Chaque signature visuelle est ainsi déterminée à partir d'une image respective comportant une représentation de ladite cible 12. La signature visuelle comporte notamment une information relative à l'aspect de la cible 12 visible sur la représentation respective. En particulier, la signature visuelle est indépendante d'une pose de la cible 12 sur la représentation respective.

Chaque signature visuelle est en forme d'un vecteur dans l'espace multidimensionnel, l'espace multidimensionnel étant par exemple un espace à 4096 dimensions. En variante l'espace multidimensionnel est un espace à moins de 4096 ou plus de 4096 dimensions, par exemple un espace à 2048 dimensions.

Le module de filtrage 20 est notamment configuré pour conserver uniquement les signatures visuelles présentant une distance par rapport à la signature visuelle la plus proche en distance de ladite signature visuelle, qui est inférieure au seuil de référence. Le seuil de référence comprend par exemple une valeur de seuil de distance pour chaque dimension de l'espace multidimensionnel. En variante, le seuil de référence est une valeur absolue de distance dans l'espace multidimensionnel. Par « signature visuelle la plus proche », il est entendu que cette signature visuelle est positionnée à une distance par rapport à ladite signature visuelle, dans l'espace multidimensionnel, qui est inférieure à l'ensemble des autres distances entre ladite signature visuelle et chaque autre signature visuelle dans l'espace multidimensionnel.

Notamment, le module de filtrage est configuré pour conserver les signatures visuelles qui présentent l'une par rapport à l'autre une distance qui est inférieure au seuil de référence.

Par exemple, le premier module de filtrage 20 est configuré pour classer les signatures visuelles parmi un premier groupe de signatures visuelles présentant une distance à leur signature visuelle la plus proche respective qui est inférieure au seuil de référence, et un deuxième groupe de signatures visuelles présentant une distance à leur signature visuelle la plus proche respective qui est supérieure ou égale au seuil de référence. Les signatures visuelles du premier groupe forment notamment un groupement (ou *cluster* en anglais) majoritaire, et les signatures visuelles du deuxième groupe sont susceptibles d'être identifiées comme présentant des anomalies par rapport aux signatures visuelles du premier groupe.

Le premier module de filtrage 20 est par exemple configuré pour déterminer le seuil de référence de manière à ce qu'un pourcentage prédéterminé de l'ensemble des signatures visuelles soit compris dans le premier groupe. Le pourcentage prédéterminé est par exemple 90% ou 95% de l'ensemble des signatures visuelles.

Par exemple, le premier module de filtrage 20 est configuré pour mettre en œuvre un algorithme de partitionnement de données, tel qu'un algorithme DBSCAN (de l'anglais *Density-Based Spatial Clustering of Applications with Noise*).

Le premier module de filtrage 20 est notamment configuré pour conserver chaque signature visuelle appartenant au premier groupe.

Par exemple, le premier module de filtrage 20 est configuré pour supprimer chaque signature visuelle appartenant au deuxième groupe.

En variante, le premier module de filtrage 20 est configuré pour marquer chaque signature visuelle appartenant au deuxième groupe comme signature visuelle distincte de la cible 12. Selon cette variante, le premier module de filtrage 20 est configuré pour transmettre chaque signature visuelle distincte au module de calcul 22. Ainsi, le dispositif de suivi 10 est par exemple configuré pour identifier et suivre une deuxième cible distincte de la cible 12, chaque signature visuelle distincte étant relative à cette deuxième cible.

Le module de calcul 22 est par exemple configuré pour calculer, à partir des signatures visuelles conservées par le premier module de filtrage 20, la moyenne de ces signatures visuelles. La moyenne des signatures visuelles conservées par le premier module de filtrage 20 est appelée moyenne de signatures visuelles dans ce qui suit.

La moyenne de signatures visuelles est une signature visuelle moyennée, notamment calculée en prenant en compte les signatures visuelles conservées par le premier module de filtrage 20 uniquement. En particulier, la ou les signatures visuelles distinctes de la cible 12 ne sont pas prises en compte pour le calcul de la moyenne de signatures visuelles.

Par « moyenne », il est notamment entendu une moyenne arithmétique. En variante, la moyenne est par exemple une moyenne harmonique, une moyenne géométrique ou une moyenne quadratique.

Par exemple, la moyenne de signatures visuelles est la moyenne arithmétique des signatures visuelles conservées par le premier module de filtrage 20. En variante, la moyenne de signatures visuelles est par exemple la moyenne harmonique, la moyenne géométrique ou la moyenne quadratique des signatures visuelles conservées par le premier module de filtrage 20.

Le module de calcul 22 est notamment configuré pour déterminer la signature visuelle de référence à partir de la moyenne de signatures visuelles. Par exemple, le module de calcul 22 est configuré pour recevoir un choix d'un opérateur définissant la moyenne de signatures visuelles des signatures visuelles en tant que signature visuelle de référence.

Le module de calcul 22 est par exemple configuré pour mémoriser la signature visuelle de référence, par exemple dans une mémoire dédiée, non représentée.

Le module de détection 24 est configuré pour détecter l'apparition de la cible 12 dans au moins une nouvelle image reçue. La nouvelle image reçue est notamment une image capturée par l'un des capteurs d'image 16 du réseau 15.

Par « apparition », il est entendu une identification potentielle de la présence de la cible 12 dans au moins une image, notamment la nouvelle image. En particulier, l'apparition est déterminée en fonction de la signature visuelle de référence, associé à la cible respective.

Le module de détection 24 est par exemple configuré pour recevoir la signature visuelle de référence et une signature visuelle de la représentation de la cible 12 comprise dans la nouvelle image reçue. La signature visuelle de la représentation de la cible 12 comprise dans la nouvelle image reçue est appelée signature visuelle d'apparition dans ce qui suit.

Le module de détection 24 est notamment configuré pour recevoir la signature visuelle d'apparition du module de calcul 22. Le module de détection 24 est par exemple configuré pour recevoir la signature visuelle d'apparition qui est obtenue à partir d'au moins une nouvelle image. La signature visuelle d'apparition est une signature visuelle obtenue à partir de la détermination d'une ou plusieurs signatures visuelles de la cible 12 à partir de la ou des nouvelle(s) image(s) reçue(s). En outre, la signature visuelle d'apparition est une signature visuelle obtenue à partir d'un filtrage, par le premier module de filtrage 20, de cette/ces signature(s) visuelle(s) en conservant chaque signature visuelle présentant, dans l'espace multidimensionnel, une distance par rapport à la signature visuelle la plus proche en distance de ladite signature visuelle, qui est inférieure au seuil de référence. Aussi, la signature visuelle d'apparition est une signature visuelle obtenue à partir d'un calcul, par le module de calcul 22, de la signature visuelle d'apparition à partir de la moyenne de la ou des signature(s) visuelle(s) conservée(s) par le premier module de filtrage 20.

Le module de détection 24 est par exemple configuré pour comparer la signature visuelle d'apparition avec la signature visuelle de référence. Notamment, le module de détection 24 est configuré pour déterminer, dans l'espace multidimensionnel, une distance de détection entre la signature visuelle d'apparition et la signature visuelle de référence. Le module de détection 24 est configuré pour détecter l'apparition de la cible 12 dans la ou les nouvelles images lorsque la distance de détection est inférieure à un seuil de détection. Le seuil de détection comprend par exemple une valeur prédéterminée pour chaque dimension dans l'espace multidimensionnel.

Dans l'exemple de la figure 1, le deuxième module de filtrage 26 comporte le filtre spatio-temporel 28 et le filtre d'apparence visuelle 30.

En variante non représentée, le deuxième module de filtrage 26 comporte un filtre unique parmi le filtre spatio-temporel 28 et le filtre d'apparence visuelle 30.

Le deuxième module de filtrage 26 est par exemple configuré pour recevoir l'apparition de la cible 12 du module de détection 24. En complément, le deuxième module de filtrage 26 est également configuré pour recevoir une information relative à la nouvelle image reçue et/ou la représentation de la cible 12 comprise dans la nouvelle image reçue.

Le deuxième module de filtrage 26 est par exemple configuré pour filtrer un faux positif de l'apparition de la cible 12. Par « faux positif », il est entendu une identification erronée de la cible 12. Notamment, le deuxième module de filtrage 26 est configuré pour détecter une absence effective de la cible 12 pour une apparition préalablement détectée par le module de détection 24.

En particulier, le deuxième module de filtrage 26 est configuré pour générer une apparition filtrée, l'apparition filtrée comprenant uniquement les apparitions de la cible 12 satisfaisant un ou plusieurs critères de filtrage du filtre spatio-temporel 28 et/ou du filtre d'apparence visuelle 30.

Le filtre spatio-temporel 28 est par exemple configuré pour comparer la position du capteur d'images 16 associé à l'acquisition de la nouvelle image et l'instant temporel de cette acquisition, à une position de référence et respectivement à un instant de référence. La position de référence est par exemple une position du capteur d'images 16 associé à une acquisition d'une image précédente, et l'instant de référence est par exemple l'instant temporel de l'acquisition de l'image précédente. L'image précédente est par exemple une image correspondant à la signature visuelle de référence.

Par exemple, le filtre spatio-temporel 28 est configuré pour calculer une vitesse moyenne de déplacement de la cible 12 entre la position de référence de la cible 12 et la position du capteur d'images 16 associé à l'acquisition de la nouvelle image.

Le filtre spatio-temporel 26 est par exemple configuré pour comparer la vitesse moyenne à une vitesse de référence. Le filtre spatio-temporel 28 est par exemple configuré pour attribuer à l'apparition une probabilité de détection effective de la cible 12 en fonction de la vitesse moyenne, en comparaison avec la vitesse de référence. La vitesse de référence est par exemple fonction d'un mode de déplacement de la cible 12, d'un type de cible 12 et/ou d'une vitesse calculée selon une vitesse prédéterminée dans une zone de déplacement. Le mode de déplacement est par exemple la marche à pied, le déplacement en véhicule motorisé ou le déplacement en véhicule non-motorisé.

Le filtre d'apparence visuelle 30 comprend par exemple un troisième réseau de neurones, configuré pour recevoir en entrée la représentation de la cible 12 comprise dans la nouvelle image reçue, et pour fournir en sortie au moins la caractéristique visuelle relative à la représentation de la cible 12 comprise dans la nouvelle image reçue. Le filtre d'apparence visuelle 30 est par exemple configuré pour comparer la caractéristique visuelle relative à la représentation de la cible 12 comprise dans la nouvelle image reçue avec une caractéristique visuelle de référence correspondante.

Le filtre d'apparence visuelle 30 est par exemple configuré pour filtrer l'apparition en fonction d'une caractéristique visuelle respective telle qu'une couleur à l'intérieur de la représentation de la cible 12 ou une forme d'un contour de la représentation de la cible 12.

Lorsque la caractéristique visuelle est la couleur à l'intérieur de la représentation de la cible 12, le filtre d'apparence visuelle 30 est par exemple configuré pour comparer la couleur dans une zone de la représentation avec une couleur de référence. La zone est par exemple le haut du corps de la cible 12 ou les jambes. Par exemple, le filtre d'apparence visuelle 30 est configuré pour calculer une moyenne de la couleur de pixels de la zone, et comparer la moyenne de la couleur à la couleur de référence. La moyenne de la couleur est par exemple la moyenne arithmétique des couleurs. En variante, la moyenne de la couleur est par exemple la moyenne harmonique, la moyenne géométrique ou la moyenne quadratique des couleurs.

Le filtre d'apparence visuelle 30 est par exemple configuré pour filtrer l'apparition dont la moyenne de la couleur de la zone diffère d'une couleur de référence. Le filtre d'apparence visuelle 30 est par exemple configuré pour filtrer l'apparition si la moyenne de la couleur de la zone présente, dans un espace chromatique, une distance à une position de référence dans cet espace chromatique, qui est supérieure à un seuil de couleur.

Le filtre d'apparence visuelle 30 comprend par exemple un modèle adapté pour mettre en œuvre l'espace chromatique CIELAB. Le modèle comporte au moins un premier paramètre qui est une clarté de la couleur. Par « clarté », il est entendu une grandeur relative à la luminance de la couleur dans la zone. La luminance définit la sensation visuelle de luminosité de la couleur dans la zone, indiqué par exemple en candéla par mètre carré. Le modèle comporte par exemple en outre un deuxième paramètre a* et un troisième paramètre b*, les deuxième et troisième paramètres correspondant à un écart de la couleur par rapport à la couleur d'une surface grise de même clarté. L'homme du métier comprendra que le deuxième paramètre a* et un troisième paramètre b* sont également dénommés chacun « température de couleur ». La surface grise est par exemple une surface éclairée en lumière du jour normalisée, également appelée D65. La mise en œuvre de l'espace CIELAB permet en particulier de filtrer des couleurs conformes à la perception de couleurs par l'humain.

En variante, le filtre d'apparence visuelle 30 comprend un autre modèle configuré pour mettre en œuvre un espace chromatique, tel qu'un modèle TSV (de Teinte Saturation Valeur), également appelé modèle HSV (de l'anglais *Hue Saturation Value*).

Le filtre d'apparence visuelle 30 comprenant le modèle adapté pour mettre en œuvre l'espace chromatique CIELAB permet de prendre en compte des changements de luminosité entre plusieurs capteurs d'images 16, car le modèle prend en compte la sensation visuelle de luminosité de la couleur. Cela permet ainsi d'améliorer la fiabilité d'identification et de suivi de la cible 12.

Lorsque la caractéristique visuelle est la forme du contour de la représentation de la cible 12, le filtre d'apparence visuelle 30 est configuré pour comparer la forme du contour à l'intérieur de la représentation de la cible 12 avec la forme d'un contour de référence. Le contour est par exemple un vêtement, tel qu'un pantalon, une robe, une jupe, une chemise, un t-shirt, un débardeur, une veste ou un manteau. En variante ou en complément, le contour est un accessoire porté par la cible 12, tel qu'un sac, des lunettes ou un chapeau.

Le module d'affichage 40 comprend par exemple un ou plusieurs écrans configurés pour afficher des informations issues de l'unité de traitement d'informations 32, notamment une image de l'apparition filtrée de la cible 12, un instant temporel de l'acquisition de cette image, et/ou une position du capteur d'images 16 associé à cette acquisition.

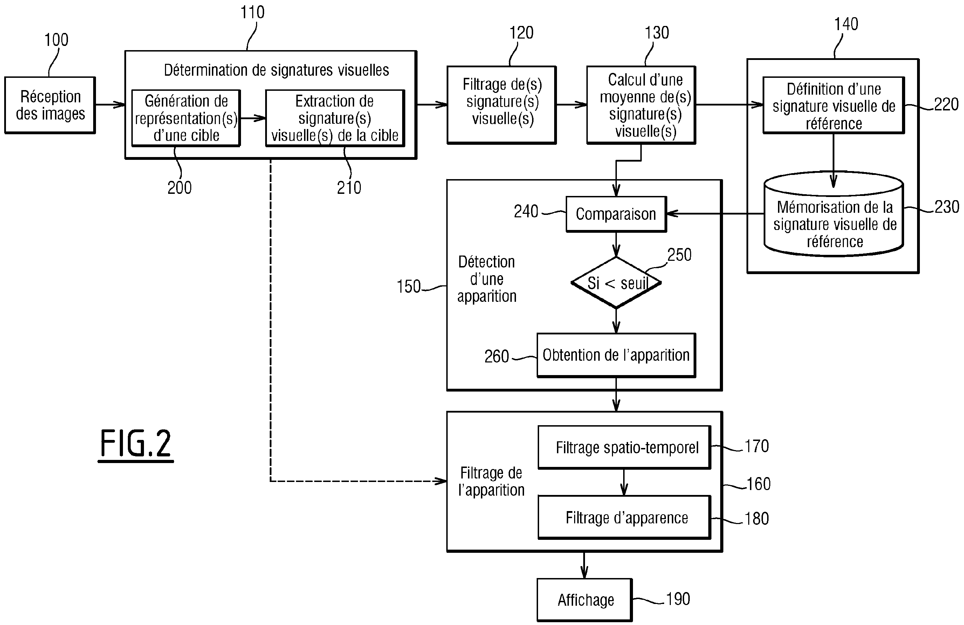

Le fonctionnement du dispositif de suivi 10 selon l'invention va désormais être expliqué à l'aide de la figure 2 représentant un organigramme du procédé d'identification et de suivi de la cible 12, le procédé étant mis en œuvre par le dispositif de suivi 10.

Lors d'une étape initiale 100, le module de réception 14 reçoit les images à partir du réseau 15 de capteurs d'images 16.

Lors de l'étape suivante 110, le module de détermination 18 détermine les signatures visuelles de la cible 12 respective à partir des images reçues. Lors de cette étape de détermination 110, chaque signature visuelle est ainsi déterminée à partir d'une image respective comportant une représentation de ladite cible 12.

Lors de l'étape suivante 120, le premier module de filtrage 20 filtre des signatures visuelles en conservant chaque signature visuelle présentant une distance, dans l'espace multidimensionnel, par rapport à la signature visuelle la plus proche en distance de ladite signature visuelle, qui est inférieure au seuil de référence.

Lors de l'étape suivante 130, le module de calcul 22 calcule par exemple, à partir des signatures visuelles conservées par le premier module de filtrage 20, la moyenne de ces signatures visuelles, appelée moyenne de signatures visuelles.

Lors de l'étape suivante 140, le module de calcul 22 calcule, dans l'espace multidimensionnel, la signature visuelle de référence à partir de la moyenne de signatures visuelles, à savoir la moyenne des signatures visuelles conservées lors de l'étape de premier filtrage 120.

Lors de l'étape suivante 150, le module de détection 24 détecte une apparition de la cible 12 dans au moins une nouvelle image reçue, par comparaison de la signature visuelle de référence avec une signature visuelle de la représentation de la cible 12 comprise dans la nouvelle image reçue.

Lors de l'étape suivante 160, le deuxième module de filtrage 26 filtre l'apparition par mise en œuvre d'au moins une sous-étape parmi une sous-étape de filtrage spatio-temporel 170, lors de laquelle le filtre spatio-temporel 28 filtre ladite apparition en fonction d'une position du capteur d'images 16 associé à une acquisition de la nouvelle image reçue et d'un instant temporel de ladite acquisition, et une sous-étape de filtrage d'apparence visuelle 180 de la cible 12, lors de laquelle le filtre d'apparence visuelle 30 filtre ladite apparition en fonction d'au moins une caractéristique visuelle relative à la représentation de la cible 12 comprise dans la nouvelle image reçue.

Dans l'exemple de figure 2, lors de cette étape de deuxième filtrage 160, le deuxième module de filtrage 26 met en oeuvre les sous-étapes de filtrage spatio-temporel 170 et de filtrage d'apparence visuelle 180.

En variante non représentée, lors de cette étape de deuxième filtrage 160, le deuxième module de filtrage 26 met en œuvre une seule sous-étape parmi la sous-étape de filtrage spatio-temporel 170 et la sous-étape de filtrage d'apparence visuelle 180.

Lors de l'étape suivante 190, le module d'affichage 40 affiche notamment des informations issues de l'unité de traitement d'informations 32, par exemple une image de l'apparition filtrée de la cible 12 reçue de l'unité de traitement d'informations 32, un instant temporel de l'acquisition de cette image, et/ou une position du capteur d'images 16 associé à cette acquisition.

L'étape de réception 100 va maintenant être décrite plus en détail.

Lors de l'étape de réception 100, le module de réception 14 reçoit par exemple les images du réseau 15 de capteurs d'images 16 par l'intermédiaire d'un module de conversion, qui est configuré pour convertir des flux de vidéo de chaque capteur d'images 16 en plusieurs images distinctes.

En variante, le module de réception 14 reçoit les images distinctes directement de la part des capteurs d'images 16. Selon cette variante, chaque capteur d'images 16 du réseau 15 convertit le flux vidéo respectif en plusieurs images distinctes.

L'étape de détermination 110 va maintenant être décrite plus en détail.

Lors d'une sous-étape 200, le module de détermination 18 reçoit les images du module de réception 14. Par exemple, le module de détermination 18 génère ensuite les représentations de la cible 12 à partir des images reçues. Le module de détermination 18 génère la ou les représentations de la cible 12 notamment via son premier réseau de neurones, le premier réseau de neurones recevant en entrée les images reçues et fournissant en sortie ladite représentation.

Par exemple, lors de cette sous-étape 200, le module de détermination 18 obtient une pluralité de représentations de cibles respectives à partir de chaque image.

Le module de détermination 18 classe en outre les représentations en fonction d'un ordre chronologique pour chaque cible 12. Le module de détermination 18 obtient des représentations ainsi classées.

Lors d'une sous-étape 210, le module de détermination 18 extrait les signatures visuelles de la ou des cibles 12 à partir des représentations classées. Notamment, le deuxième réseau de neurones reçoit en entrée les représentations classées et fournit en sortie les signatures visuelles correspondant aux représentations. Le module de détermination 18 détermine notamment une signature visuelle pour chaque représentation.

L'étape de premier filtrage 120 va maintenant être décrite plus en détail.

Lors de l'étape de premier filtrage 120, le module de filtrage 20 conserve notamment uniquement les signatures visuelles présentant une distance par rapport à la signature visuelle la plus proche en distance de la signature visuelle respective, qui est inférieure au seuil de référence.

Par exemple, le premier module de filtrage 20 classe les signatures visuelles parmi le premier groupe de signatures visuelles présentant une distance à leur signature visuelle la plus proche respective qui est inférieure au seuil de référence, et le deuxième groupe de signatures visuelles présentant une distance à leur signature visuelle la plus proche respective qui est supérieure ou égale au seuil de référence.

Le premier module de filtrage 20 détermine le seuil de référence de manière à ce que le pourcentage prédéterminé de signatures visuelles soit compris dans le premier groupe.

Par exemple, le premier module de filtrage 20 met en œuvre un algorithme de partitionnement de données, tel que l'algorithme DBSCAN.

Par exemple, le premier module de filtrage 20 supprime chaque signature visuelle appartenant au deuxième groupe.

En variante, le premier module de filtrage 20 marque chaque signature visuelle appartenant au deuxième groupe comme signature visuelle distincte de la cible 12. Selon cette variante, le premier module de filtrage 20 transmet chaque signature visuelle distincte au module de calcul 22. Ainsi, selon cette variante, le dispositif de suivi 10 identifie et suit également la deuxième cible distincte de la cible 12.

L'étape de calcul 140 va maintenant être décrite plus en détail.

Lors d'une sous-étape 220, le module de calcul 22 détermine la signature visuelle de référence à partir de la moyenne de signatures visuelles. Par exemple, le module de calcul 22 reçoit un choix d'un opérateur définissant la moyenne de signatures visuelles en tant que signature visuelle de référence.

Lors d'une sous-étape 230, le module de calcul 22 mémorise la signature visuelle de référence dans une mémoire dédiée.

L'étape de détermination 150 va maintenant être décrite plus en détail.

Lors de l'étape de détection 150, le module de détection 24 reçoit notamment la signature visuelle de référence et la signature visuelle de la représentation de la cible 12 comprise dans la nouvelle image reçue, dite signature visuelle d'apparition.

Par exemple, pour obtenir la signature visuelle d'apparition, les étapes de réception 100, de détermination 110, de premier filtrage 120 et de calcul 130 sont mises en œuvre pour la ou les nouvelles images. Par exemple, le module de réception 14 reçoit la ou les nouvelles images à partir du réseau 15 de capteurs d'images 16. Ensuite, le module de détermination 18 détermine des signatures visuelles de la cible 12 respective à partir de la ou des nouvelles images reçues. Ensuite, le premier module de filtrage 20 filtre les signatures visuelles en conservant chaque signature visuelle présentant une distance, dans l'espace multidimensionnel, par rapport à la signature visuelle la plus proche respective parmi les signatures visuelles correspondant à la ou les nouvelles images, qui est inférieure au seuil de référence. Ensuite, le module de calcul 22 calcule, à partir des signatures visuelles correspondant à la ou les nouvelles images et conservées par le premier module de filtrage 20, la moyenne de ces signatures visuelles, qui est la signature visuelle d'apparition.

Lors d'une sous-étape 240 de l'étape de détermination 150, le module de détection 24 compare par exemple la signature visuelle d'apparition avec la signature visuelle de référence. Notamment, le module de détection 24 détermine, dans l'espace multidimensionnel, une distance de détection entre la signature visuelle d'apparition et la signature visuelle de référence.

Lors d'une sous-étape 250 de l'étape de détermination 150, le module de détection 24 compare la distance de détection au seuil de détection.

Si la distance est inférieure au seuil de détection, lors d'une sous-étape 260 de l'étape de détermination 150, le module de détection 24 obtient l'apparition de la cible 12 dans la ou les nouvelles images, et détecte ainsi l'apparition.

L'étape de deuxième filtrage 160 va maintenant être décrite plus en détail.

Lors de l'étape de deuxième filtrage 160, le deuxième module de filtrage 26 reçoit par exemple l'apparition de la cible 12 du module de détection 24. En complément, le deuxième module de filtrage 26 reçoit également une information relative à la nouvelle image reçue et/ou la représentation de la cible 12 comprise dans la nouvelle image reçue.

Lors de cette étape de deuxième filtrage 160, le deuxième module de filtrage 26 filtre notamment un faux positif de l'apparition de la cible 12. En particulier, le deuxième module de filtrage 26 génère l'apparition filtrée, l'apparition filtrée comprenant uniquement les apparitions de la cible 12 satisfaisant un ou plusieurs critères du filtrage spatio-temporel et/ou du filtrage d'apparence visuelle.

Lors de la sous-étape de filtrage spatio-temporel 170, le filtre spatio-temporel 28 compare la position du capteur d'images 16 associé à l'acquisition de la nouvelle image et l'instant temporel de cette acquisition, à la position de référence et respectivement à l'instant de référence.

Par exemple, le filtre spatio-temporel 28 calcule la vitesse moyenne de déplacement de la cible 12 entre la position de référence de la cible 12 et la position du capteur d'images 16 associé à l'acquisition de la nouvelle image. Le filtre spatio-temporel 26 compare par exemple la vitesse moyenne à la vitesse de référence. Le filtre spatio-temporel 28 attribue par exemple à l'apparition une probabilité de détection effective de la cible 12 en fonction de la vitesse moyenne, en comparaison avec la vitesse de référence.

Lors de la sous-étape de filtrage d'apparence visuelle 180, le filtre d'apparence visuelle 30 reçoit, notamment à l'entrée du troisième réseau de neurones, la représentation de la cible 12 comprise dans la nouvelle image reçue, et fournit, notamment en sortie du troisième réseau de neurones, au moins la caractéristique visuelle relative à la représentation de la cible 12 comprise dans la nouvelle image reçue. Le filtre d'apparence visuelle 30 compare par exemple la caractéristique visuelle relative à la représentation de la cible 12 comprise dans la nouvelle image reçue avec une caractéristique visuelle de référence correspondante.

Par exemple, le filtre d'apparence visuelle 30 filtre l'apparition en fonction d'une caractéristique visuelle respective, telle qu'une couleur à l'intérieur de la représentation de la cible 12 ou une forme d'un contour de la représentation de la cible 12.

Lorsque la caractéristique visuelle est la couleur à l'intérieur de la représentation de la cible 12, le filtre d'apparence visuelle 30 compare la couleur dans une zone de la représentation avec une couleur de référence. Par exemple, le filtre d'apparence visuelle 30 calcule la moyenne de la couleur de pixels de la zone, et compare la moyenne de la couleur à la couleur de référence. Le filtre d'apparence visuelle 30 filtre par exemple l'apparition dont la moyenne de la couleur de la zone diffère d'une couleur de référence. Notamment, le filtre d'apparence visuelle 30 filtre l'apparition si la moyenne de la couleur de la zone présente, dans l'espace chromatique, une distance à une position de référence dans cet espace chromatique, qui est supérieure au seuil de couleur.

Le filtre d'apparence visuelle 30 comprend par exemple un modèle mettant en œuvre l'espace chromatique CIELAB.

Lorsque la caractéristique visuelle est la forme du contour de la représentation de la cible 12, le filtre d'apparence visuelle 30 compare la forme du contour à l'intérieur de la représentation de la cible 12 avec la forme d'un contour de référence.

Par exemple, le procédé d'identification et de suivi est mis en œuvre pour chaque image reçue du réseau 15 de capteurs d'images 16.

On conçoit alors que le dispositif de suivi 10 selon l'invention et le procédé associé permettent d'identifier et de suivre au moins la cible 12 de manière moins complexe et plus fiable.

## Revendications

1. Dispositif électronique d'identification et de suivi (10) d'au moins une cible (12), comprenant :
- un module de réception (14) configuré pour recevoir des images à partir d'un réseau (15) de capteurs d'images (16) ;
- un module de détermination (18) configuré pour déterminer des signatures visuelles d'une cible (12) respective à partir des images reçues, chaque signature visuelle étant déterminée à partir d'une image respective comportant une représentation de ladite cible (12), chaque signature visuelle étant en forme d'un vecteur dans un espace multidimensionnel ;
- un premier module de filtrage (20) configuré pour filtrer les signatures visuelles en conservant chaque signature visuelle présentant, dans l'espace multidimensionnel, une distance par rapport à la signature visuelle la plus proche en distance de ladite signature visuelle, qui est inférieure à un seuil de référence ;
- un module de calcul (22) configuré pour calculer, dans l'espace multidimensionnel, une signature visuelle de référence à partir d'une moyenne des signatures visuelles conservées par le premier module de filtrage (20) ;
- un module de détection (24) configuré pour détecter une apparition de la cible (12) dans au moins une nouvelle image reçue, par comparaison de la signature visuelle de référence avec une signature visuelle de la représentation de la cible (12) comprise dans la nouvelle image reçue, et
- un deuxième module de filtrage (26) comportant au moins un filtre parmi un filtre spatio-temporel (28) configuré pour filtrer ladite apparition en fonction d'une position du capteur d'images (16) associé à une acquisition de la nouvelle image reçue et d'un instant temporel de ladite acquisition, et un filtre d'apparence visuelle (30) de la cible (12) configuré pour filtrer ladite apparition en fonction d'au moins une caractéristique visuelle relative à la représentation de la cible (12) comprise dans la nouvelle image reçue.

2. Dispositif (10) selon la revendication 1, dans lequel le module de détermination (18) est configuré pour obtenir la représentation de ladite cible (12) via un réseau de neurones, des variables d'entrée du réseau de neurones étant les images reçues et une variable de sortie étant ladite représentation.

3. Dispositif (10) selon l'une quelconque des revendications précédentes, dans lequel le filtre spatio-temporel (28) est configuré pour calculer une vitesse moyenne de déplacement de la cible (12) entre une position de référence de la cible (12) et la position du capteur d'images (16) associé à l'acquisition de la nouvelle image reçue.

4. Dispositif (10) selon la revendication 3, dans lequel le filtre spatio-temporel (28) est configuré pour attribuer à ladite apparition une probabilité de détection effective de la cible (12) en fonction de la vitesse moyenne, en comparaison avec une vitesse de référence.

5. Dispositif (10) selon l'une quelconque des revendications précédentes, dans lequel chaque caractéristique visuelle est choisie parmi le groupe consistant en : une couleur à l'intérieur de la représentation de la cible (12) et une forme d'un contour de la représentation de la cible (12).

6. Dispositif (10) selon la revendication 5, dans lequel le filtre d'apparence visuelle (30) comprend un modèle comportant au moins un premier paramètre, le premier paramètre étant une clarté de la couleur, le modèle étant adapté pour mettre en œuvre l'espace chromatique CIELAB.

7. Dispositif (10) selon l'une quelconque des revendications précédentes, dans lequel le filtre d'apparence visuelle (30) comprend un réseau de neurones, configuré pour recevoir en entrée la représentation de la cible (12) comprise dans la nouvelle image reçue, et pour fournir en sortie au moins la caractéristique visuelle relative à la représentation de la cible (12) comprise dans la nouvelle image reçue, le filtre d'apparence visuelle (30) étant configuré pour comparer ladite caractéristique visuelle avec une caractéristique visuelle de référence correspondante.

8. Système électronique (17) d'identification et de suivi d'au moins une cible (12), comprenant :
- un réseau (15) de capteurs d'images (16) ;
- au moins un dispositif électronique d'identification et de suivi (10) d'au moins une cible (12) selon l'une quelconque des revendications précédentes, ledit dispositif (10) étant configuré pour recevoir et traiter des images du réseau (15) de capteurs d'images (16).

9. Procédé d'identification et de suivi d'au moins une cible (12), le procédé étant mis en œuvre par un dispositif électronique d'identification et de suivi (10) et comprenant :
- la réception (100) d'images à partir d'un réseau (15) de capteurs d'images (16) ;
- la détermination (110) de signatures visuelles d'une cible (12) respective à partir des images reçues, chaque signature visuelle étant déterminée à partir d'une image respective comportant une représentation de ladite cible (12), chaque signature visuelle étant en forme d'un vecteur dans un espace multidimensionnel ;
- le premier filtrage (120) comprenant le filtrage des signatures visuelles en conservant chaque signature visuelle présentant, dans l'espace multidimensionnel, une distance par rapport à la signature visuelle la plus proche en distance de ladite signature visuelle, qui est inférieure à un seuil de référence ;
- le calcul (140), dans l'espace multidimensionnel, d'une signature visuelle de référence à partir d'une moyenne des signatures visuelles conservées lors du premier filtrage (120) ;
- la détection (150) d'une apparition de la cible (12) dans au moins une nouvelle image reçue, par comparaison de la signature visuelle de référence avec une signature visuelle de la représentation de la cible (12) comprise dans la nouvelle image reçue, et
- le deuxième filtrage (160) comportant au moins un filtrage spatio-temporel (170) comprenant le filtrage de ladite apparition en fonction d'une position du capteur d'images (16) associé à une acquisition de la nouvelle image reçue et d'un instant temporel de ladite acquisition, et un filtrage d'apparence visuelle (180) de la cible (12), le filtrage d'apparence visuelle (180) comprenant le filtrage de ladite apparition en fonction d'au moins une caractéristique visuelle relative à la représentation de la cible (12) comprise dans la nouvelle image reçue.

10. Programme d'ordinateur comportant des instructions logicielles qui, lorsqu'elles sont exécutées par un ordinateur, mettent en œuvre un procédé selon la revendication précédente.
